# EUROPÄISCHE PATENTANMELDUNG

(11) **EP 4 064 129 A1**
(43) Veröffentlichungstag der Anmeldung: **28.09.2022**
(21) Anmeldenummer: 22163513.9
(22) Anmeldetag: 22.03.2022
(51) Int. Cl.: G06K 19/077, B65D 25/20, G06K 19/067, G06Q 10/08

(54) **FUNKTIONSGEGENSTAND MIT EINEM TRANSPONDER**

(30) Priorität: 22.03.2021 DE 202021101432 U
(71) Anmelder: Tiger Media Deutschland GmbH, 20359 Hamburg (DE)
(72) Erfinder: WEITENDORF, Till, 20144 Hamburg (DE)
(74) Vertreter: LBP Lemcke, Brommer & Partner Patentanwälte mbB

(57) **Zusammenfassung**

Die Erfindung betrifft einen Funktionsgegenstand (1) aus Papp- oder Karton material (1a) mit einem in das Papp- oder Karton-Material (1a) integrierten RFID-/NFC-Transponder (2). Weiter betrifft die Erfindung ein System aus einem Gebrauchsgegenstand (1), wie einer Verpackung oder einem Druckerzeugnis mit einem in das Papp- oder Karton-Material (1a) integrierten RFID-/NFC-Transponder (2) und einem Lesegerät (10c) zum Auslesen eines Speicherinhalts des RFID-/NFC-Transponders (2), insbesondere einer Kennung.

## Beschreibung

Die Erfindung betrifft einen Funktionsgegenstand aus Papp- oder Karton-Material mit einem in das Papp- oder Karton-Material integrierten RFID-/NFC-Transponder gemäß Anspruch 1.

Die Erfindung betrifft auch ein System aus einem Gebrauchsgegenstand, wie einer Lebensmittelverpackung oder einem Buch, mit in den Gebrauchsgegenstand integriertem RFID-/NFC-Transponder und mit einem Lesegerät zum Auslesen eines Speicherinhalts des RFID-/NFC-Transponders gemäß Anspruch 10.

Die Begriffe "Funktionsgegenstand" und "Gebrauchsgegenstand" werden nachfolgend im Wesentlichen synonym verwendet. Hierunter sei jeweils ein Gegenstand oder Objekt verstanden, das zusätzlich zu seiner reinen Existenz (oder Sammelbarkeit) noch einen weiteren bestimmten Zweck erfüllt, der zudem von der Existenz des integrierten Transponders unberührt ist. So ist eine Verpackung ein Funktionsgegenstand, der ungeachtet der Existenz des Transponders u.a. die Funktion eines (schützenden) Umhüllens eines Verpackungsguts erfüllt. Ein Buch ist ein Funktionsgegenstand, der ungeachtet der Existenz des Transponders u.a. die Funktion einer Vermittlung von Informationen erfüllt. Wenn hier und im Folgenden von einem Transponder die Rede ist, meint dies erfindungsgemäß einen RFID-/NFC-Transponder.

Die Anmelderin vertreibt unter anderem sogenannte Audio-Boxen, die in der Lage sind, mittels eines entsprechenden Lesegeräts eine RFID-/NFC-Kennung von einer entsprechend ausgestalteten Karte zu lesen, dann über eine Internet-Verbindung wenigstens eine mit der Kennung verknüpfte Mediendatei von einem externen Server zu laden und diese mittels der Audio-Box zur Wiedergabe zu bringen. Die Audio-Boxen der Anmelderin sind unter der Bezeichnung "Tigerbox" bzw. "Tigerbox touch" weithin bekannt.

Als Kennungsträger fungieren bei den genannten Audio-Boxen der Anmelderin Trägerelemente in Form von (Sammel-)Karten, in die ein RFID-/NFC-Transponder integriert ist, wobei der Karte selbst keine weitere Funktion als das Aufnehmen des Transponders zukommt. Diese Karten werden in einen entsprechenden Schlitz an der Audio-Box eingeführt, sodass ein in der Audio-Box enthaltenes Lesegerät die Kennung auslesen kann. Die Box sorgt dann für einen entsprechenden Download bzw. die Wiedergabe, sofern bzw. sobald die Mediendatei auf der Box vorhanden ist.

Dieses Konzept ist grundsätzlich nicht auf Audiodateien beschränkt, sondern kann - bei entsprechend ausgestatteter Box - auch Videodateien bzw. allgemein Mediendateien oder Software aller Art umfassen.

Der Erfindung liegt die Aufgabe zugrunde, das vorstehend skizzierte Konzept zu erweitern und insbesondere alternative Zugangsmöglichkeiten zu den genannten Mediendateien zu schaffen. Auf diese Weise soll das genannte Konzept einem vergrößerten Interessentenkreis zugänglich gemacht werden.

Diese Aufgabe wird gelöst durch einen Funktionsgegenstand mit den Merkmalen des Anspruchs 1 sowie ein System mit den Merkmalen des Anspruchs 10.

Vorteilhafte Weiterbildungen der jeweiligen erfindungsgemäßen Idee sind in den zugehörigen Unteransprüchen definiert.

Ein erfindungsgemäßer Funktionsgegenstand besteht zumindest teilweise aus einem Papp- oder Karton-Material mit einem in das Papp- oder Karton-Material integrierten RFID-/NFC-Transponder. Der Begriff "Papp-/Kartonmaterial" soll auch (dickeres) Papier mit umfassen, sofern dieses zur Integration eines Transponders geeignet ist.

Ein erfindungsgemäßes System umfasst einen erfindungsgemäßen Funktions- oder Gebrauchsgegenstand, wie eine (Lebensmittel-)Verpackung oder ein Druckerzeugnis, und ein Lesegerät zum Auslesen eines Speicherinhalts des RFID-/NFC-Transponders, insbesondere einer Kennung desselben.

Nach einem Grundgedanken der vorliegenden Erfindung ist der RFID-/NFC-Transponder, der nach dem Vorstehenden zum Identifizieren wenigstens einer Mediendatei dienen kann, Bestandteil eines Funktionsgegenstands, in den er zunächst integriert ist. Wenn also nun der Transponder in der weiter oben skizzierten Art und Weise wenigstens einen Code zum Identifizieren wenigstens einer Mediendatei gespeichert hat, kann dieser Code in Kombination mit den genannten (Audio-)Boxen dazu verwendet werden, die betreffende Mediendatei zu laden und wiederzugeben. Dabei kann der Transponder anfangs in quasi jeden beliebigen Funktionsgegenstand, der sich zum Integrieren eines solchen Transponders eignet, platziert und auf diese Weise in Verkehr gebracht werden. Anschließend kann der Transponder zusammen mit dem ihn direkt umgebenden Material von dem restlichen Funktionsgegenstand entfernt (herausgelöst oder abgetrennt) und in der weiter oben skizzierten Art und Weise nach Art der genannten (Sammel-)Karten verwendet werden. Alternativ ist es aber auch möglich, den Transponder in seiner in den Funktionsgegenstand integrierten Konfiguration zu nutzen, worauf noch genauer eingegangen wird.

Zwar sind aus dem Stand der Technik bereits als (Sammel-)Karten ausgebildete Kennungsträger mit RFID-/NFC-Transponder bekannt; allerdings sind diese nicht Teil eines übergeordneten Funktionsgegenstands. Dagegen ist im Rahmen der vorliegenden Erfindung in Abgrenzung von einer solchen Ausgestaltung vorgesehen, den RFID-/NFC-Transponder in das Papp-/Kartonmaterial eines solchen Funktionsgegenstands einzubetten.

Vorzugsweise ist das Material des Funktionsgegenstands selbst um den Transponder herum zerschneidbar, z.B. entlang einer vorgezeichneten Umrisslinie, oder in sonstiger Weise trennbar, z.B. perforiert oder vorgestanzt, um den Transponder zusammen mit einem Teil des Funktionsgegenstands zu entfernen - insbesondere, wenn es sich bei dem Funktionsgegenstand um eine Verpackung oder dergleichen handelt. Auch Bücher oder dgl. können allerdings Seiten enthalten, die mit entsprechend herauslösbar ausgebildeten Transpondern ausgestattet sind. Der so entfernte Transponder kann anschließend unmittelbar - bei entsprechender Steifigkeit des verwendeten Papp- oder Kartonmateriales - als kartenförmiger Kennungsträger für die genannten Audio-Boxen der Anmelderin genutzt werden. Diese Kennungsträger werden in einen entsprechenden Schlitz an der Audio-Box eingeführt, sodass ein in der Audio-Box enthaltenes Lesegerät die Kennung des Transponders auslesen kann.

Dabei kann in Weiterbildung vorgesehen sein, dass das Papp-/Kartonmaterial eine zusätzliche Ober- und/oder Unterschicht aufweist, z.B. in Form einer oberseitigen Bedruckung und/oder einer unterseitigen (lebensmittelechten) Beschichtung.

Alternativ zu dem oben beschriebenen Heraustrennen besteht im Rahmen der Erfindung die Möglichkeit, den in den Funktionsgegenstand eingebetteten Transponder mittels eines vorzugsweise portablen RFID-/NFC-Lesegeräts direkt auszulesen. Das Lesegerät weist dann vorzugsweise eine Einrichtung zum bevorzugt drahtlosen Verbinden mit einer entsprechend modifizierten Audio-Box der Anmelderin auf oder kann selbst als eine solche ausgebildet sein. Beispielsweise können auf diese Weise in (Bilder-)Bücher integrierte RFID-/NFC-Chips ausgelesen und damit verknüpfte Mediendateien konsumiert werden.

Eine erste Weiterbildung des erfindungsgemäßen Funktionsgegenstands sieht vor, dass in dem RFID-/NFC-Transponder wenigstens eine Kennung gespeichert ist, welche Kennung mittels eines geeigneten Lesegeräts auslesbar ist, zum eindeutigen Identifizieren wenigstens einer Mediendatei. Auf diese Weise kann der Transponder, ggf. nach seinem Herauslösen, unmittelbar zusammen mit den bekannten (Audio-)Boxen verwendet werden.

Besonders bevorzugt ist es, wenn der Funktionsgegenstand zumindest am Ort des Transponders noch aufweist: eine obere Deckschicht, insbesondere aus Papier oder Kunststoff; eine mit der oberen Deckschicht verbundene Funktionsschicht, welche Funktionsschicht den RFID-/NFC-Transponder enthält; sowie optional eine untere Deckschicht auf einer der oberen Deckschicht abgewandten Seite der Funktionsschicht, insbesondere aus Papier oder Kunststoff. Auf diese Weise kann der herausgelöste Transponder ähnlich einer herkömmlichen (Sammel-)Karte ausgestaltet sein und insbesondere zusammen mit dem ihn umgebenden Papp-/Kartonmaterial gegen äußere Schadeinflüsse geschützt sein.

Es hat sich als besonders vorteilhaft herausgestellt, wenn der Funktionsgegenstand im Zuge einer wieder anderen Weiterbildung der vorliegenden Erfindung so ausgestaltet ist, dass die obere Deckschicht und/oder die untere Deckschicht bedruckt oder bedruckbar ist, insbesondere mit einem bildlichen Motiv. Auf diese Weise kann die ästhetische Wirkung des herausgelösten Transponders vergrößert werden. Außerdem ist es mithilfe des bildlichen Motivs möglich, einen Zusammenhang zwischen einem Speicherinhalt des Transponders bzw. der dadurch identifizierten Mediendatei und dem (herausgelösten) Transponder als solchem herzustellen - beispielsweise, indem das genannte Motiv einen Inhalt der durch den Transponderinhalt identifizierten Mediendatei repräsentiert. Gleiches gilt offensichtlich, wenn der Transponder in ein Druckerzeugnis integriert ist.

Im Zuge einer wieder anderen Weiterbildung des erfindungsgemäßen Funktionsgegenstands kann vorgesehen sein, dass die obere Deckschicht und/oder die untere Deckschicht bemalbar ist. Auf diese Weise kann die Kreativität eines Nutzers des herausgelösten Transponders angeregt und gefördert werden. Beispielsweise kann der Nutzer selbst das Papp-/Kartonmaterial bzw. die Deckschicht(en) mit einem aufgemalten Motiv versehen, welches seiner Meinung nach besonders gut den (Speicher-)Inhalt des Transponders bzw. der dadurch identifizierten Mediendatei zum Ausdruck bringt.

Als besonders vorteilhaft hat es sich erwiesen, wenn die Deckschicht(en) abwischbar oder abwaschbar ausgebildet ist/sind, um eine Bedruckung oder Bemalung ändern oder erneuern zu können.

Weiterhin kann bei einer entsprechenden Ausgestaltung des erfindungsgemäßen Funktionsgegenstands vorgesehen sein, dass die Funktionsschicht größer ist als die obere Deckschicht. Mit anderen Worten: Die Funktionsschicht steht seitlich über die daran haftende Deckschicht hervor. Auf diese Weise kann das Herauslösen des Transponders zusammen mit dem ihn umgebenden Papp-/Kartonmaterial erleichtert sein.

Eine alternative Ausgestaltung des erfindungsgemäßen Funktionsgegenstands sieht dagegen vor, dass das Papp- oder Kartonmaterial entlang einer umfänglich geschlossenen Kontur, welche Kontur den Transponder einschließt, durchtrennbar ist, vorzugsweise perforiert. Nur der innerhalb der geschlossenen Kontur befindliche Teil des Funktionsgegenstands mitsamt dem Transponder ist dann leicht von dem restlichen Funktionsgegenstand trennbar. Auch solche Ausgestaltungen sind von Spielkärtchen oder Sammelbildern hinreichend bekannt, bei denen regelmäßig ein geschlossener Rahmen verbleibt, nachdem das eigentliche Kärtchen oder Sammelbild entfernt wurde. Auf diese Weise ergibt sich eine gute Herauslösbarkeit des Transponders, wobei das umgebende Material insbesondere im Randbereich gegen Zerstörungen geschützt ist.

Es wurde bereits darauf hingewiesen, dass im Zuge einer besonders bevorzugten Weiterbildung des erfindungsgemäßen Funktionsgegenstands der RFID-/NFC-Transponder wenigstens eine Kennung gespeichert haben kann, welche Kennung mittels eines geeigneten Lesegeräts auslesbar ist, zum eindeutigen Identifizieren wenigstens einer Mediendatei. Das Identifizieren von Mediendateien anhand einer Transponder-Kennung ist dem Fachmann von den weiter oben genannten Audio-Boxen und existierenden Konkurrenzprodukten bereits bekannt. Neu ist jedoch in diesem Zusammenhang, den Transponder als Teil eines übergeordneten Funktionsgegenstands vorzusehen. Mittels des genannten Lesegeräts lassen sich solche Transponder auch über ausreichend lange Reichweiten hinweg problemlos und ohne großen Energiebedarf auslesen, sodass neben einer sicheren und einfachen Handhabbarkeit auch ein weitreichender Schutz, insbesondere von Kindern, gegenüber möglicherweise schadhafter Strahlungseinwirkung sichergestellt ist.

Es wurde bereits darauf hingewiesen, dass der Funktionsgegenstand bei entsprechender Weiterbildung so ausgestaltet sein kann, dass das Motiv einen inhaltlichen Bezug zu der Mediendatei hat. Auf diese Weise wird die geplante bestimmungsgemäße Verwendung des Funktionsgegenstands erleichtert, und es ergibt sich ein ästhetischer Mehrwert.

Bei einer wieder anderen Weiterbildung des erfindungsgemäßen Funktionsgegenstands kann noch vorgesehen sein, dass im Bereich des Transponders wenigstens noch eine zusätzliche Versteifungsschicht angeordnet ist. Die Versteifungsschicht kann aus steifem Papier, Pappe, Karton oder Kunststoff oder aus einer Kombination dieser oder anderer vorstehend genannter Materialien bestehen. Auf diese Weise weist der herausgelöste Transponder bzw. das ihn umgebende Material bereits eine gewisse Eigenstabilität auf und kann grundsätzlich auch ohne ein zusätzliches Trägerelement nach Art der weiter oben angesprochenen Karten verwendet werden.

Nach der zuletzt beschriebenen Weiterbildung des erfindungsgemäßen Funktionsgegenstands kann es also möglich sein, auf zusätzliche flächige Trägerelemente ganz zu verzichten, wenn nämlich das Material des Funktionsgegenstands selbst ausreichend steif ausgebildet ist, sodass nach dem Herauslösen ein Trägerelement zur Stabilisierung nicht erforderlich ist.

Bevorzugt handelt es sich bei dem Funktionsgegenstand um eine Verpackung, vorzugsweise Spielzeug- oder Lebensmittelverpackung, oder ein Druckerzeugnis, vorzugsweise Buch oder Katalog, worauf weiter oben bereits hingewiesen wurde. Die Erfindung ist aber nicht auf derartige Anwendungen beschränkt.

Grundsätzlich kommt alternativ anstelle des erwähnten Papp-/Kartonmaterials für die Einbettung des Transponders auch ein Kunststoffmaterial oder ein Kompositmaterial aus Pappe/Karton und Kunststoff oder Metall in Betracht. Der Begriff "Papp-/Kartonmaterial" soll insbesondere auch zumindest die genannten Kompositmaterialien mit einschließen.

Weiter oben wurde bereits darauf hingewiesen, dass bei einem erfindungsgemäßen System aus einem Gebrauchsgegenstand, wie einer Verpackung oder einem Druckerzeugnis, einem in das Material des Gebrauchsgegenstands integrierten Transponders und einem Lesegerät zum Auslesen eines Speicherinhalts des RFID-/NFC-Transponders bevorzugt der Transponder zusammen mit dem ihn umgebenden Material von dem restlichen Gebrauchsgegenstand getrennt und dann mit dem Lesegerät in Wirkverbindung gebracht wird. Alternativ kann das Lesegerät auch ohne vorheriges Herauslösen des Transponders mit diesem interagieren.

Eine erste Weiterbildung des erfindungsgemäßen Systems sieht vor, dass das Lesegerät in einem geeigneten Leseabstand zu dem Lesegerät eine Aufnahme für das vorzugsweise entlang einer geschlossenen Kontur abgetrennte Papp- oder Kartonmaterial aufweist. Auf diese Weise ist sichergestellt, dass das Lesegerät bei einem in die Aufnahme eingesteckten oder eingebrachten Transponder mit umgebenden Papp-/Kartonmaterial die auf dem (integrierten) Transponder gespeicherte Information (Kennung) problemlos auslesen kann. Auch dies ist dem Fachmann grundsätzlich bekannt, sodass an dieser Stelle hierauf nicht weiter einzugehen ist. Es sei jedoch darauf hingewiesen, dass bei geeigneter Ausgestaltung des Funktionsgegenstands der Transponder mit umgebenden Papp-/Kartonmaterial als solcher, also ohne ein zusätzliches Trägerelement, in die Aufnahme des Lesegeräts einsteckbar bzw. einbringbar sein kann, was die Handhabung erleichtert.

Vorzugsweise ist das Lesegerät bei entsprechender Weiterbildung des erfindungsgemäßen Systems wirkverbunden mit einer Download-Einheit zum Herunterladen von Mediendateien von wenigstens einem externen Server. Vorzugsweise betrifft der Download zumindest das Herunterladen der durch die Transponder-Kennung identifizierten Mediendatei. Auf diese Weise führt der Erwerb eines erfindungsgemäßen Funktionsgegenstands zusammen mit der vorstehend beschriebenen Ausgestaltung des Systems unmittelbar zu einer Möglichkeit, auf bestimmte Mediendateien von einem externen Server zuzugreifen bzw. zumindest eine durch die Transponder-Kennung identifizierte Mediendatei herunterzuladen.

Vorzugsweise ist das erfindungsgemäße System in Weiterbildung dieser Idee weiterhin wirkverbunden (insbesondere auch drahtlos) mit einer Wiedergabe-Einheit zum Wiedergeben der Mediendatei/en und einer Speichereinheit zum zumindest temporären Speichern der Mediendatei/en. Auf diese Weise ist eine durch den Transponder identifizierte Mediendatei nicht nur herunterladbar bzw. speicherbar, sondern kann unmittelbar auch konsumiert, das heißt angehört und/oder angeschaut werden. Auf diese Weise führt der Erwerb eines erfindungsgemäßen Funktionsgegenstands unmittelbar zu einem entsprechenden Mediengenuss. Lesegerät einerseits und Speicher-/Wiedergabeeinheit andererseits können baulich vereint (in einem gemeinsamen Gehäuse) oder als getrennte Geräte/Einheiten ausgeführt sein. Gleiches gilt für die Download-Einheit.

Auf diese Weise schafft die vorliegende Erfindung einen einfachen und aus ökonomischer Sicht höchst interessanten Weg, einem vergrößerten Publikum den Zugang zu Mediendateien zu ermöglichen. Aus wirtschaftlicher Sicht ist hierbei insbesondere interessant, dass durch die Verwendung der erfindungsgemäßen Funktionsgegenstände in einfacher Weise eine verbesserte Wahrnehmbarkeit im Handel erreichbar ist. Auf diese Weise besteht einerseits die Möglichkeit, das erfindungsgemäße System bzw. die vorbekannten Audio-Boxen zu bewerben bzw. attraktiv zu machen. Außerdem lässt sich durch die gezielte Anbringung der Funktionsgegenstände an bestimmten Produkten möglicherweise die Kaufentscheidung von Konsumenten (günstig) beeinflussen. Beispielsweise ist es möglich, ein bestimmtes Nahrungsmittel bzw. dessen Verpackung mit einem integrierten Transponder zu versehen, um eine Kaufentscheidung für das genannte Produkt zu fördern.

Sinnvollerweise kann in diesem Zusammenhang sichergestellt sein, dass ein Entfernen des Transponders von einem Produkt erst nach dem Erwerb des Produkts und dem Entfernen zumindest einer Umverpackung möglich ist, damit die Transponder nicht ohne den Erwerb eines betreffend ausgestatteten Produkts von diesem entfernt werden können.

Es kann bei entsprechender Weiterbildung der erfindungsgemäßen Idee möglich sein, dass ein Medienzugriff mittels der erfindungsgemäßen Funktionsgegenstände in der Zeit und/oder im Umfang (Anzahl der Zugriffe) beschränkt ist. Die Erfindung umfasst jedoch auch Ausgestaltungen, bei denen ein Funktionsgegenstand einen quasi dauerhaften Zugang zu den dadurch identifizierten Medieninhalten ermöglicht.

Die herausgelösten Transponder können nach Art der angesprochenen Sammelbilder (dauerhaft) gesammelt werden, vorteilhafterweise durch Archivieren in einer Sammelmappe.

Weitere Eigenschaften und Vorteile der Erfindung ergeben sich aus der nachfolgenden Beschreibung anhand von Ausführungsbeispielen anhand der Zeichnung.
- Figur 1: zeigt im Schnitt eine erste Ausgestaltung des erfindungsgemäßen Funktionsgegenstands;
- Figur 2: zeigt im Schnitt eine zweite Ausgestaltung des erfindungsgemäßen Funktionsgegenstands;
- Figur 3: zeigt im Schnitt eine weitere Ausgestaltung des erfindungsgemäßen Funktionsgegenstands;
- Figur 4: zeigt schematisch eine Ausgestaltung des erfindungsgemäßen Systems; und
- Figur 5: zeigt schematisch eine andere Ausgestaltung des erfindungsgemäßen Systems.

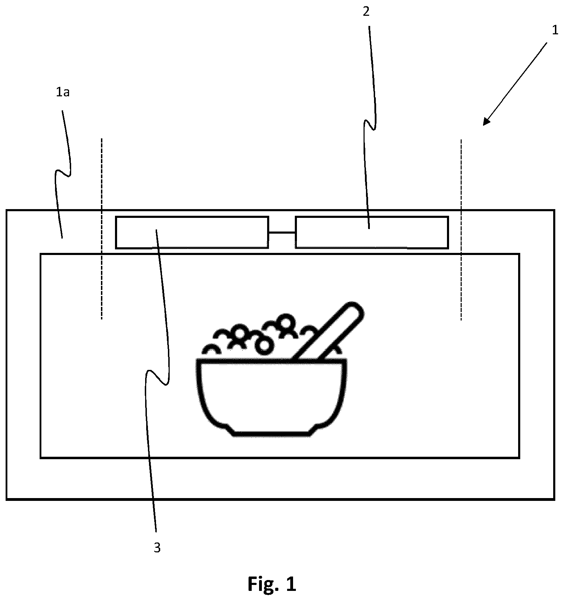

Figur 1 ist eine erste Ausgestaltung des erfindungsgemäßen Funktionsgegenstands im Schnitt gezeigt. Der Funktionsgegenstand ist insgesamt mit dem Bezugszeichen 1 bezeichnet und ist ohne Beschränkung als Lebensmittelverpackung (Müsliverpackung) aus Papp-/Kartonmaterial ausgebildet. Er umfasst einen RFID-/NFC-Transponder (nachfolgend kurz als Transponder bezeichnet), der mit dem Bezugszeichen 2 bezeichnet ist. Der Transponder 2 steht in Wirkverbindung mit einer zugehörigen Antenne 3 bzw. beinhaltet diese, was dem Fachmann an sich bekannt ist. Auf den grundsätzlichen Aufbau eines Transponders ist an dieser Stelle nicht weiter einzugehen. Im Folgenden meint "Transponder" immer auch dessen Antenne.

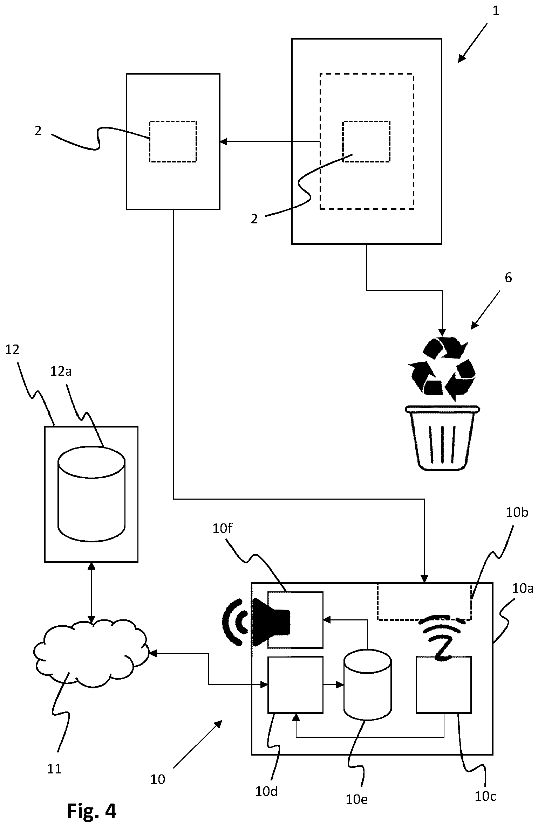

Der Transponder 2 ist in das Material 1a der Verpackung integriert (eingebettet). Mittels Durchtrennens des Verpackungsmaterials 1a entlang den gestrichelten Linien L kann der Transponder 2 mitsamt des ihn umgebenden Materials entnommen und bestimmungsgemäß verwendet werden, wie oben beschrieben (vgl. auch Figur 4). Die Linien L bilden in der (nicht gezeigten) Draufsicht eine geschlossene Kontur, die den Transponder 2 einschließt.

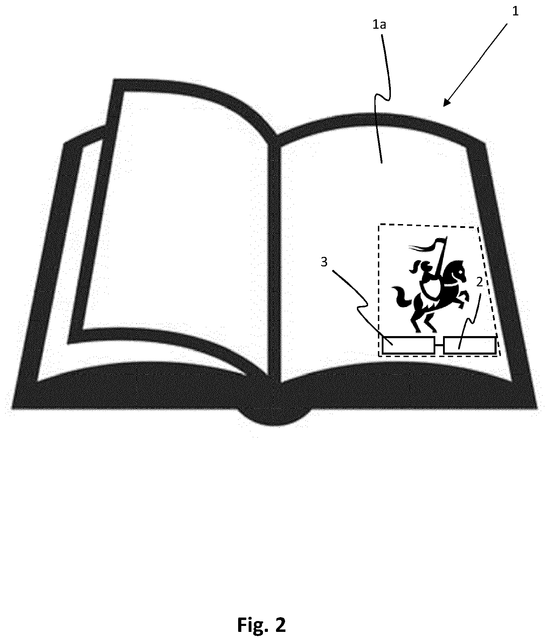

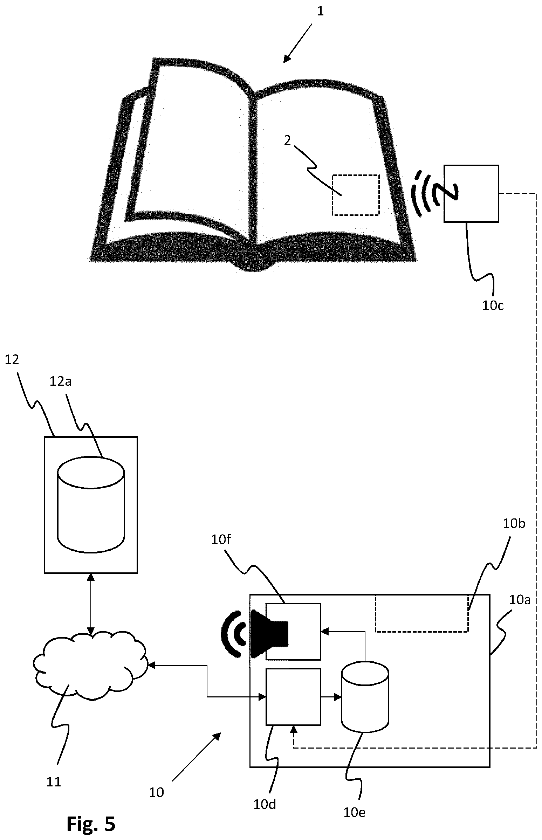

Gemäß Figur 2 kann der Funktionsgegenstand 1 auch ein Buch sein; der Transponder 2 ist dann bevorzugt in das Material 1a der Buchseiten eingebracht. Es kann mehr als nur ein Transponder 2 vorhanden sein. Auch hier kann der Transponder 2 zusammen mit dem ihn umgebenden Buchseitenmaterial 1a herauslösbar sein (vorgeschnittene oder vorgestanzte Konturlinie L); bevorzugt verbleibt der Transponder 2 aber im Buch und wird dort ausgelesen (vgl. Figur 5). Ein mit dem Transponder 2 verknüpfter Medieninhalt kann mittels eines Bildes 4 symbolisiert sein.

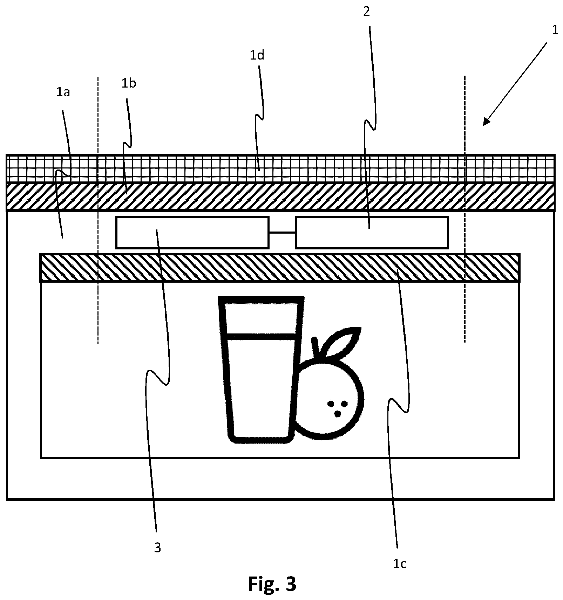

Gemäß Figur 3 weist der Funktionsgegenstand 1 (hier eine Getränkeverpackung) abgesehen von dem Transponder 2 eine obere Deckschicht 1b auf, die insbesondere aus Papier oder Kunststoff bestehen kann. Oben auf der Deckschicht 1b kann eine Bedruckung oder dergleichen 1c, insbesondere mit einem bildlichen Motiv, angeordnet sein. Unterhalb der oberen Deckschicht 1b ist eine sogenannte Funktionsschicht (das Verpackungsmaterial 1a) vorgesehen, welche Funktionsschicht den Transponder 2 enthält (einbettet). Unterhalb der Funktionsschicht ist eine untere Deckschicht 1d angeordnet, welche insbesondere dazu dienen kann, das Verpackungsgut von dem Verpackungsmaterial 1a fernzuhalten. Die untere Deckschicht 1d kann an allen Innenflächen der Verpackung (des Funktionsgegenstands 1) angeordnet sein, was nicht dargestellt ist. Gleiches gilt für die obere Deckschicht 1b und die Bedruckung 1c analog.

Der Transponder 2 ist wiederum in das Material 1a der Verpackung integriert (eingebettet). Mittels Durchtrennens des Verpackungsmaterials 1a und der weiteren Schichten 1b-1d entlang den gestrichelten Linien L kann der Transponder 2 mitsamt des ihn umgebenden Materials 1a (und der Schichtenabschnitte 1b-1d) entnommen und bestimmungsgemäß verwendet werden, wie oben beschrieben (vgl. auch Figur 4).

Wie der Fachmann erkennt, ist die Zeichnung in Figur 1 und Figur 3 rein schematisch zu verstehen, insbesondere was die relativen Abmessungen der Schichten und Schichtdicken zueinander betrifft, und ist nicht maßstäblich gezeichnet. Insgesamt ist insbesondere der Transponder 2 entgegen der schematischen Darstellung in Figur 1 oder 3 relativ dünn ausgebildet und weist insgesamt eine Dicke im Submillimeter- oder Millimeterbereich auf.

Bei dem Funktionsgegenstand 1 gemäß Figur 1 oder 3 handelt es sich ohne Beschränkung um eine Nahrungsmittelverpackung, vorliegend speziell einen Müslikarton oder eine Getränkeverpackung. Allerdings können anstelle der hier gezeigten und beschriebenen Funktionsgegenstände eine große Vielzahl von anderen Gegenständen verwendet werden, beispielsweise Spielzeugverpackungen, Kataloge, Hefte und Magazine, Nahrungsmittelverpackungen jeglicher Art, Kleidungsstücke (insbesondere verpackte Kleidungsstücke), etc., sofern sie aus Material bestehen, welches das Einbetten und Herauslösen des Transponders, wie beschrieben, ermöglich - und zwar nach Möglichkeit ohne Hilfsmittel (Werkzeuge), außer ggf. einer Schere oder dgl.

Die Figur 4 illustriert schematisch eine bevorzugte Verwendung des Funktionsgegenstands 1 bzw. des herausgelösten Transponders 2, wie vorstehend anhand der Figuren 1 bis 3 beschrieben. Auch in Figur 4 bezeichnen gleiche Bezugszeichen gleiche oder zumindest gleichwirkende Elemente, wie in den anderen Figuren.

Oben rechts in Figur 4 ist erneut ein quasi beliebiger Funktionsgegenstand 1 aus einem Papp-/Kartonmaterial 1a dargestellt, in den der Transponder 2 herauslösbar eingebettet ist. Dies wird in Figur 4 durch ein gestricheltes Rechteck L (Konturlinie) symbolisiert.

Der herausgelöste Transponder 2 (der noch von einem rechteckförmigen Abschnitt des Materials 1a umgeben ist) kann dann verwendet werden, wie dies von den Karten ("Tiger Cards") bekannt ist, die herkömmlicher Weise mit den Audio-Boxen der Anmelderin verwendet werden. Der restliche Funktionsgegenstand 1, von dem der Transponder 2 entfernt wurde, kann anschließend ganz normal verwendet und am Ende ggf. entsorgt werden, wie schematisch bei Bezugszeichen 5 dargestellt.

Bezugszeichen 10 bezeichnet eine an sich bekannte Wiedergabevorrichtung für digitale Mediendateien, die im Vorstehenden auch als Audio-Box bezeichnet wurde. Die Audio-Box 10 umfasst, innerhalb eines gemeinsamen Gehäuses 10a, zunächst eine Aufnahme 10b nach Art eines Kartenschlitzes. Diese Aufnahme 10b und eine darin aufgenommene Karte bzw. der Transponder 2 mit dem umgebenden Material 1a befindet sich im Wirkungsbereich eines RFID-/NFC-Lesegeräts 10c, welches in der Lage ist, den in der Karte bzw. in dem Transponder 2 gespeicherten Code auszulesen. Das Lesegerät 1c steht in Wirkverbindung mit einer Download-Einheit 10d, über welche die Audio-Box 10 über das Internet 11 (oder ein beliebiges anderes Kommunikationsnetz) mit einem externen Datenserver 12 verbunden oder verbindbar ist, auf welchem externen Server 12 die Mediendateien gespeichert sind, wie bei Bezugszeichen 12a symbolisch dargestellt. Die Audio-Box 10 verfügt weiterhin über eine Speichereinheit 10e in Wirkverbindung mit der Download-Einheit 10d, welche Speichereinheit 10e zum zumindest temporären Speichern der heruntergeladenen Mediendateien ausgestaltet ist. Schließlich verfügt die Audio-Box 10 noch über eine Wiedergabe-Einheit 10f, vorliegend beispielsweise einen Lautsprecher mit entsprechender Ansteuerelektronik, die zum Wiedergeben der Mediendateien aus der Speichereinheit 10e vorgesehen ist.

Auf diese Weise ergeben sich insbesondere folgende Abläufe bei der bestimmungsgemäßen Verwendung des in Figur 4 gezeigten erfindungsgemäßen Systems: Der Benutzer, der zweckmäßigerweise bereits über eine Audio-Box 10 verfügt, erwirbt den Funktionsgegenstand 1 mit dem eingebetteten Transponder 2. Der Transponder 2 wird zerstörungsfrei herausgelöst, der Funktionsgegenstand 1 wird bestimmungsgemäß verwendet und dann entsorgt 5. Der Transponder 2 mit dem umgebenden Material 1a kann genauso verwendet werden wie die normalerweise als Zubehör zu der Audio-Box 10 vertriebenen Karten. Die Funktionsweise der Audio-Box 10 ist an sich bekannt und braucht hier nicht genauer beschrieben zu werden. Dabei dient der in das Material 1a integrierte Transponder 2 dazu, digitale Medieninhalte eindeutig zu identifizieren. Das Lesegerät 10c ist in der Lage, den entsprechenden Code aus dem Transponder 2 auszulesen, sodass die Audio-Box 10 die entsprechenden Medieninhalte wiedergeben kann. Zu diesem Zweck werden sie entweder von dem externen Server 12 heruntergeladen oder - falls sie bereits in der Audio-Box 10 gespeichert sind - unmittelbar wiedergegeben.

Da erfindungsgemäß quasi beliebige Funktionsgegenstände 1 als anfänglicher Träger für die Transponder 2 dienen können, ergeben sich vielfältige kommerzielle Nutzungsmöglichkeiten, von denen letztendlich sowohl die Anbieter der Funktionsgegenstände 1 als auch die Anbieter der Audio-Box 10 profitieren können.

Figur 5 zeigt eine andere Ausgestaltung des Systems, bei der das Lesegerät 10c als von der restlichen Audio-Box 10 separate, mobile Einheit ausgebildet ist, die bevorzugt drahtlos (z.B. per WLAN- oder Bluetooth-Standard) mit der Audio-Box 10 kommuniziert. Der Transponder 2 befindet sich, wie in Figur 2, in einem Buch. Auch hier ist das Lesegerät 10c in der Lage, den entsprechenden Code aus dem Transponder 2 auszulesen, sodass die Audio-Box 10 die entsprechenden Medieninhalte wiedergeben kann, wie schon beschrieben. Ein Herauslösen des Transponders 2 aus dem Buch (Funktionsgegenstand 1) ist dabei nicht erforderlich; das Buch bleibt unversehrt.

## Patentansprüche

1. Funktionsgegenstand (1) aus Papp- oder Karton-Material (1a) mit einem in das Papp- oder Karton-Material (1a) integrierten RFID-/NFC-Transponder (2).

2. Funktionsgegenstand (1) nach Anspruch 1, bei dem in dem RFID-/NFC-Transponder (2) wenigstens eine Kennung gespeichert ist, welche Kennung mittels eines geeigneten Lesegeräts (10c) auslesbar ist, zum eindeutigen Identifizieren wenigstens einer Mediendatei.

3. Funktionsgegenstand (1) nach Anspruch 1 oder 2, aufweisend:
eine obere Deckschicht (1b), insbesondere aus Papier oder Kunststoff; eine mit der oberen Deckschicht (1b) verbundene Funktionsschicht aus dem Papp-/Karton-Material (1a), welche Funktionsschicht den RFID-/NFC-Transponder (2) enthält;
optional eine untere Deckschicht (1d) auf einer der oberen Deckschicht (1b) abgewandten Seite der Funktionsschicht, insbesondere aus Papier oder Kunststoff.

4. Funktionsgegenstand (1) nach Anspruch 3, bei dem die obere Deckschicht (1b) und/oder die untere Deckschicht (1d) bedruckt oder bedruckbar ist, insbesondere mit einem bildlichen Motiv (4).

5. Funktionsgegenstand (1, 1', 1") nach Anspruch 3 oder 4, bei dem die obere Deckschicht (1b) und/oder die untere Deckschicht (1d) bemalbar und/oder abwaschbar ist.

6. Funktionsgegenstand (1) nach einem der Ansprüche 3 bis 5, bei dem die Funktionsschicht größer ist als die obere Deckschicht (1b).

7. Funktionsgegenstand (1) nach einem der Ansprüche 1 bis 6, bei dem das Papp- oder Karton-Material (1a) entlang einer umfänglich geschlossenen Kontur (L), welche Kontur (L) den Transponder (2) einschließt, durchtrennbar ist, vorzugsweise perforiert, sodass vorzugsweise der Transponder (2) zerstörungsfrei von dem restlichen Funktionsgegenstand (1) trennbar ist.

8. Funktionsgegenstand (1) nach Anspruch 4 bei Rückbezug auf Anspruch 2, bei dem die Bedruckung (1c) oder das Motiv (4) einen inhaltlichen Bezug zu der Mediendatei hat.

9. Funktionsgegenstand (1) nach einem der Ansprüche 1 bis 8, welcher Funktionsgegenstand (1) eine Verpackung, vorzugsweise Spielzeug- oder Lebensmittelverpackung, oder ein Druckerzeugnis, vorzugsweise Buch oder Katalog, ist.

10. System aus einem Gebrauchsgegenstand (1), wie einer Verpackung oder einem Druckerzeugnis, nach einem der Ansprüche 1 bis 9 und einem Lesegerät (10c) zum Auslesen eines Speicherinhalts des RFID-/NFC-Transponders (2), insbesondere der Kennung gemäß Anspruch 2.

11. System nach Anspruch 10, bei dem das Lesegerät (10c) in einem geeigneten Leseabstand zu dem Lesegerät (10c) eine Aufnahme (10b) für das vorzugsweise entlang der Kontur (L) gemäß Anspruch 7 abgetrennte Papp- oder Karton-Material (1a) aufweist.

12. System nach Anspruch 10 oder 11, bei dem das Lesegerät (10c) wirkverbunden ist mit einer Download-Einheit (10d) zum Herunterladen von Mediendateien von einem externen Server (12), bei Rückbezug auf Anspruch 2 zumindest zum Herunterladen der durch die Kennung identifizierten Mediendatei.

13. System nach Anspruch 12, bei dem das Lesegerät (10c) weiterhin wirkverbunden ist mit einer Wiedergabe-Einheit (10f) zum Wiedergeben der Mediendatei/en und einer Speichereinheit (10e) zum zumindest temporären Speichern der Mediendatei/en.

14. System nach Anspruch 13, bei dem das Lesegerät (10c) und die Wiedergabe-Einheit (10f) eine bauliche Einheit bilden und in ein gemeinsames Gehäuse integriert sind.

15. System nach Anspruch 12, bei dem das Lesegerät (10c) und die Wiedergabe-Einheit (10f) als separate bauliche Einheiten ausgebildet sind, die bevorzugt drahtlos miteinander wirkverbunden sind.
